# NEUE EUROPÄISCHE PATENTSCHRIFT

(11) **EP 3 574 371 B2**
(45) Veröffentlichungstag und Bekanntmachung des Hinweises auf die Entscheidung über den Einspruch: **14.10.2026**
(45) Hinweis auf die Patenterteilung: 24.03.2021
(21) Anmeldenummer: 18703706.4
(22) Anmeldetag: 25.01.2018
(51) Int. Cl.: G02C 7/02, G02C 13/00

(54) **COMPUTERIMPLEMENTIERTES VERFAHREN ZUR BESTIMMUNG VON ZENTRIERPARAMETERN**
COMPUTER-IMPLEMENTED METHOD FOR DETERMINING CENTRING PARAMETERS
PROCÉDÉ MIS EN OEUVRE PAR ORDINATEUR DESTINÉ À DÉTERMINER DES PARAMÈTRES DE CENTRAGE

(30) Priorität: 27.01.2017 EP 17153559
(43) Veröffentlichungstag der Anmeldung: 04.12.2019
(73) Patentinhaber: Carl Zeiss Vision International GmbH, 73430 Aalen (DE); Carl Zeiss AG, 73447 Oberkochen (DE)
(72) Erfinder: NIEUWENHUIS, Claudia, 73431 Aaalen (DE); SCHWARZ, Oliver, 73479 Ellwangen (DE)
(74) Vertreter: Pfiz/Gauss Patentanwälte PartmbB
(86) Internationale Anmeldenummer: PCT/EP2018/051841
(87) Internationale Veröffentlichungsnummer: WO 2018/138206

(56) Entgegenhaltungen:
- WO-A1-2012/113805
- WO-A1-2015/101737
- WO-A1-2016/026570
- DE-A1- 102008 012 268
- DE-A1- 102009 004 383
- DE-A1- 102011 115 239
- DE-A1- 102011 115 239
- DE-B4- 102011 115 239
- FR-A1- 2 987 908
- US-A1- 2003 081 173
- US-A1- 2003 081 173
- US-A1- 2003 123 026
- US-A1- 2003 123 026
- US-A1- 2003 123 026
- US-A1- 2009 021 693
- US-A1- 2014 253 875
- US-A1- 2015 015 848
- US-A1- 2015 304 530
- KARL AMON: "lmpressionlST - Das 4-in-1 Integrierte Service-Ierminal von Rodenstock", DOZ OPTOMETRIE & FASHION 1-2006, 1 January 2006 (2006-01-01), pages 56 - 61, XP055909828
- PAUL URTHALER: "Glasses detection and segmentation from face portrait images", MASTER'S THESIS, GRAZ UNIVERSITY OF TECHNOLOGY, 1 December 2008 (2008-12-01), Graz University of Technology , XP055641092, Retrieved from the Internet <URL:https://www.tugraz.at/fileadmin/user_upload/Institute/ICG/Images/team_bischof/mib/paper_pdfs/StudentsMasterTheses/DA_urthaler.pdf> [retrieved on 20191111]
- ZHONG JING, MARIANI R.: "Glasses detection and extraction by deformable contour", PROCEEDINGS / 15TH INTERNATIONAL CONFERENCE ON PATTERN RECOGNITION : BARCELONA, SPAIN, SEPTEMBER 3 - 7, 2000, IEEE COMPUTER SOCIETY, LOS ALAMITOS, CALIF. [U.A.], vol. 2, 3 September 2000 (2000-09-03) - 7 September 2000 (2000-09-07), Los Alamitos, Calif. [u.a.] , pages 933 - 936, XP010533966, ISBN: 978-0-7695-0750-7, DOI: 10.1109/ICPR.2000.906227
- RAINER SEßNER, UTTENWEILER DIETMAR: "3D-Videozentriersystem zur hochgenauen Vermessung der Zentrierdaten und individueller Parameter des Systems Brille Auge", DGAO PROCEEDINGS 2007, 1 January 2007 (2007-01-01), XP055717881, Retrieved from the Internet <URL:https://www.dgao-proceedings.de/download/108/108_b26.pdf> [retrieved on 20200724]
- "Augenoptik - Brillenfassungen", DIN EN ISO 8624:2002, 1 June 2002 (2002-06-01), XP055717887
- M TIEMANN, P C SEITZ, G ESSER: "The Next Generation 3D Vision System for Measuring the Individual Parameters of Spectacle Wearers", DGAO PROCEEDINGS, 1 January 2014 (2014-01-01), XP055717891, Retrieved from the Internet <URL:https://www.dgao-proceedings.de/download/115/115_p13.pdf>
- "RODENSTOCK IMPRESSIONIST® 3 Online Benutzerhandbuch", RODENSTOCK GMBH, 14 August 2012 (2012-08-14), pages 1 - 79, XP055909874
- DIANA BORZA, ADRIAN DARABANT, RADU DANESCU: "Eyeglasses Lens Contour Extraction from Facial Images Using an Efficient Shape Description", SENSORS, MDPI, CH, vol. 13, no. 10, 10 October 2013 (2013-10-10), CH , pages 13638 - 13658, XP055227455, ISSN: 1424-8220, DOI: 10.3390/s131013638
- WOLFGANG WESEMANN: "Moderne Videozentriersysteme und Pupillometer im Vergleich, Teil 1", DOZ OPTOMETRIE & FASHION 6-2009, vol. 64, 2 June 2009 (2009-06-02), pages 44 - 50, 94, XP055909887
- MaBe und optische Laten" von Collins J.F und Augustin A.J , Print ISBN: 9783 662 05923 4. Online ISBN 978-3-662-05922-7, Springer-Verlag Berlin Heidelberg 1997
- Handbuch zum ImpressionlST

## Beschreibung

Die Erfindung betrifft ein computerimplementiertes Verfahren zur Bestimmung von Zentrierparametern, insbesondere zur Anpassung von Brillengläsern an eine vorgegebene Brillenfassung und an den Kopf eines Probanden und/oder zur Zentrierung von Brillengläsern gemäß Oberbegriff des Anspruchs 1 bzw. gemäß Oberbegriff des Anspruchs 6.

Zentrierparameter werden benutzt, um Brillengläser korrekt in einer Brillenfassung anzuordnen bzw. zu zentrieren, so dass die Brillengläser in korrekter Position relativ zu den Augen der die Brille tragenden Person angeordnet sind. Dabei handelt es sich zum Teil um anatomische Parameter der betreffenden Person, wie beispielsweise den Pupillenabstand, zum Teil um rein fassungsspezifische Parameter wie die Fassungsscheibenbreite oder die Fassungsscheibenhöhe und zum Teil um Kombinationen aus anatomischen und fassungsspezifischen Parametern, wie beispielsweise den Hornhautscheitelabstand und die Durchblickshöhe. Einen Überblick über die gängigen Zentrierparameter gibt die DIN EN ISO 13666 vom Oktober 2013.

Bei bekannten Verfahren zur Bestimmung von Zentrierparametern werden unkalibrierte Bilder aufgenommen, wobei an der Brille bzw. Brillenfassung ein Messbügel befestigt werden muss. Dies ist umständlich und störend. Desweiteren ist aus der US 2003/0123026 A1 eine Vorrichtung der eingangs genannten Art bekannt, die aus Bildern automatisch Zentrierparameter berechnet. Bei dem vorbekannten Verfahren werden Brillen virtuell anprobiert. Dies setzt voraus, dass die die Geometrie der Brillenfassung beschreibenden Parameter vorab bekannt sind. Ein Verfahren der eingangs genannten Art, bei dem mit Hilfe eines Tracerdatensatzes die Repräsentation eines Brillenfassungsrands bzw. von Glasrändern mittels eines an der Fassung angebrachten Messbügels bestimmt wird, ist aus der DE 10 2011 115 239 A1 bekannt.

Es ist Aufgabe der Erfindung, ein computerimplementiertes Verfahren der eingangs genannten Art derart weiterzubilden, dass es einfacher durchzuführen ist.

Diese Aufgabe wird erfindungsgemäß durch ein computerimplementiertes Verfahren mit den Merkmalen des Anspruches 1 und durch ein computerimplementiertes Verfahren mit den Merkmalen des Anspruchs 6 gelöst.

Der Erfindung liegt der Gedanke zugrunde, ein vereinfachtes Modell für die in der Brillenfassung aufzunehmenden Brillengläser bereitzustellen, indem die Geometrie der Brillenfassung beschreibende Parameter und insbesondere die nasalen und/oder temporalen Fassungsränder beschreibende Parameter ermittelt werden und dass an diese Parameter das Modell für die Brillengläser angepasst wird. Die Fassungsränder können durch Geraden angenähert werden.

Dabei werden kalibrierte Bilder bereitgestellt. Deren Kalibrierung umfasst die extrinsischen Eigenschaften der die Bilder aufnehmenden Kameras wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird. Eine ausführliche Beschreibung der Kalibrierung von Kameras findet sich im Lehrbuch "Multiple View Geometry in Computer Vision" von Richard Hartley und Andrew Zisserman, 2. Auflage, Cambridge University Press 2004, und dort insbesondere auf Seite 8. Aus den Bildern werden mittels geometrischer Positionsbestimmung nicht nur geometrische Parameter ermittelt, die die Position der Augen beschreiben, sondern auch geometrische Parameter, die die Geometrie der Brillenfassung beschreiben. Zudem wird ein dreidimensionales Modell für die in der Brillenfassung aufzunehmenden Brillengläser an die die Geometrie der Brillenfassung beschreibenden geometrischen Parameter angepasst. Die die Position der Augen beschreibenden geometrischen Parameter, die die Geometrie der Brillenfassung beschreibenden geometrischen Parameter und das dreidimensionale Modell werden alternativ zueinander oder in Kombination zur Berechnung der Zentrierparameter herangezogen.

Das Verfahren sieht vor, dass an die die nasalen und/oder temporalen Fassungsränder beschreibenden Parameter Ebenen oder Linearkombinationen von Flächen n-ter Ordnung, insbesondere von mindestens einer Ebene und/oder mindestens einem Paraboloid, als Näherung für die Flächen der in der Brillenfassung aufzunehmenden Brillengläser angepasst werden. Dies stellt eine Vereinfachung des Modells dar, die einfacher zu berechnen ist. Zweckmäßig werden die die nasalen und temporalen Fassungsränder beschreibenden Parameter mittels Epipolargeometrie und/oder mittels Triangulation ermittelt. Es werden mindestens drei gleichzeitig aus unterschiedlichen Aufnahmerichtungen aufgenommene kalibrierte Bilder des Kopfes bereitgestellt, wobei ein Frontbild den Kopf von vorne abbildet und jeweils ein Seitenbild den Kopf von links und von rechts abbildet. Die Aufnahmerichtungen der Seitenbilder schließen mit der Aufnahmerichtung des Frontbilds jeweils einen Winkel von mehr als 60 Grad, z.B. 90°±10° ein.

Gemäß einer vorteilhaften Weiterbildung ist vorgesehen, dass die die Position der Augen beschreibenden geometrischen Parameter die Position des Hornhautscheitels im Raum umfassen.

Gemäß einer vorteilhaften Weiterbildung der Erfindung wird die in einer ersten Näherung bestimmte Position des Hornhautscheitels im Raum einer Korrekturrechnung unterzogen. Die Art der Korrekturrechnung ist dann abhängig von der Art, wie die Position des Hornhautscheitels im Raum in der ersten Näherung bestimmt wird.

Es ist möglich, bei einer sogenannten pupillenbasierten Auswertung die Position des Hornhautscheitels im Raum in erster Näherung als Schnittpunkt eines die Hornhaut tangierenden Sichtstrahls einer der die Seitenbilder aufnehmenden Seitenkameras mit einem auf die Pupille gerichteten Sichtstrahl einer das Frontbild aufnehmenden Frontkamera zu bestimmen. Ist dies der Fall, wird vorteilhaft mittels der Korrekturrechnung die Position des Hornhautscheitels gemäß a = q + µ * v + µ * w berechnet, wobei a der Positionsvektor des Hornhautscheitels im Raum nach Durchführung der Korrekturrechnung, q die Position des Harnhautscheitels in erster Näherung, µ ein Erfahrungswert für den Abstand zwischen dem Pupillenzentrum und dem Hornhautscheitel, v ein Einheitsvektor der Raumrichtung vom Pupillenzentrum zur Frontkamera und w ein Einheitsvektor der durch das Zentrum der Hornhautkugel verlaufenden Aufnahmerichtung ist.

Alternativ hierzu ist es auch möglich, eine reflexbasierte Auswertung vorzunehmen, indem bei der Aufnahme der Bilder ein Lichtblitz vorzugsweise mittels einer LED erzeugt wird, wobei die Position des Hornhautscheitels im Raum in erster Näherung als die Position des Reflexpunkts des Lichtblitzes auf der Hornhaut bestimmt wird. Ausgehend von dieser ersten Näherung kann, wenn der Lichtblitz mittels einer mittig vor dem Gesicht des Probanden angeordneten Lichtquelle erzeugt wird, vorteilhaft mittels der Korrekturrechnung die Position des Hornhautscheitels in horizontaler Richtung ausgehend vom Reflexpunkt mittels Addition von Δx =+/ -r * sin (½ * (arccos z/a + arctan x/(z-v))) zur x-Koordinate berechnet werden, wobei r ein Erfahrungswert für den Hornhautradius, a der Abstand des optischen Zentrums einer das Frontbild aufnehmenden Frontkamera zum Reflexpunkt, x und z die x- und z-Koordinaten des Reflexpunkts in einem Koordinatensystem mit dem Nullpunkt im optischen Zentrum der Frontkamera, wobei die Aufnahmerichtung der Frontkamera der z-Richtung entspricht und die x-Richtung horizontal orthogonal zur z-Richtung steht und in z-Richtung betrachtet nach rechts weist, und v der Abstand der den Lichtblitz erzeugenden Lichtquelle vom optischen Zentrum der Frontkamera in z-Richtung ist. Ergänzend oder alternativ hierzu kann mittels der Korrekturrechnung vorteilhaft die Position des Hornhautscheitels in y-Richtung ausgehend vom Reflexpunkt mittels Addition von Δy =+/ -r * sin ½ * (arctan l/(d-v)) berechnet wird, wobei r ein Erfahrungswert für den Hornhautradius, d der Abstand des optischen Zentrums der Frontkamera zum Reflexpunkt, v der Abstand der den Lichtblitz erzeugenden Lichtquelle vom optischen Zentrum der Frontkamera in z-Richtung und l der Abstand der Lichtquelle vom optischen Zentrum der Frontkamera in y-Richtung ist, wobei die y-Richtung orthogonal zur x-Richtung und zur z-Richtung ist und im Raum nach oben weist.

Dabei ist das Pluszeichen in x-Richtung anzuwenden, wenn der Hornhautscheitel des aus der Sicht des Probanden linken Auges detektiert wird, das Minuszeichen ist für das aus der Sicht des Probanden rechte Auge anzuwenden. In y-Richtung ist das Pluszeichen anzuwenden, wenn die den Lichtblitz aussendende Lichtquelle auf einer niedrigeren Höhe positioniert ist als die Frontkamera, das Minuszeichen ist anzuwenden, wenn sie in einer größeren Höhe montiert ist.

Vorteilhaft wird die Pupille bzw. der Reflexpunkt mittels Merkmalsextraktion und/oder Merkmalsmatchings (Merkmalsvergleich) und/oder mittels maschinellen Lernens durch Vergleich mit einer Vielzahl vorbekannter Daten detektiert. Diesem Verfahrensschritt kann eine Gesichtsdetektion und/oder eine Detektion von Gesichtsmerkmalen wie den Augen als Vorverarbeitung vorausgehen, bei der detektiert wird, welche Bilddaten zum Gesicht des Probanden gehören, so dass nur diese Daten in die Detektion einfließen.

Um die Bestimmung des Hornhautscheitels im Raum für beide Augen vornehmen zu können, wird mindestens ein gleichzeitig mit dem ersten und zweiten Bild seitlich bezüglich des Kopfes aufgenommenes, kalibriertes drittes Bild bereitgestellt.

Vorzugsweise wird das erfindungsgemäße computerimplementierte Verfahren mit einer Vorrichtung durchgeführt, wie sie grundsätzlich in Anspruch 21 sowie im Detail in der folgenden Figurenbeschreibung beschrieben wird.

Die erfindungsgemäß bestimmten Zentrierparameter können vorteilhaft zum Zentrieren eines Brillenglases in einer Brillenfassung und/oder zum Einschleifen eines Brillenglases in eine Brillenfassung herangezogen werden. Dabei wird in einem Verfahrensschritt das mindestens eine Brillenglas mit den bestimmten Zentrierparametern in der Brillenfassung zentriert oder es wird das mindestens eine Brillenglas basierend auf den bestimmten Zentrierparametern für eine Anordnung in der Brillenfassung eingeschliffen. Auf diese Weise können Brillengläser und Brillen hergestellt werden.

Im Folgenden wird die Erfindung anhand eines in der Zeichnung schematisch dargestellten Ausführungsbeispiels näher erläutert. Es zeigen:

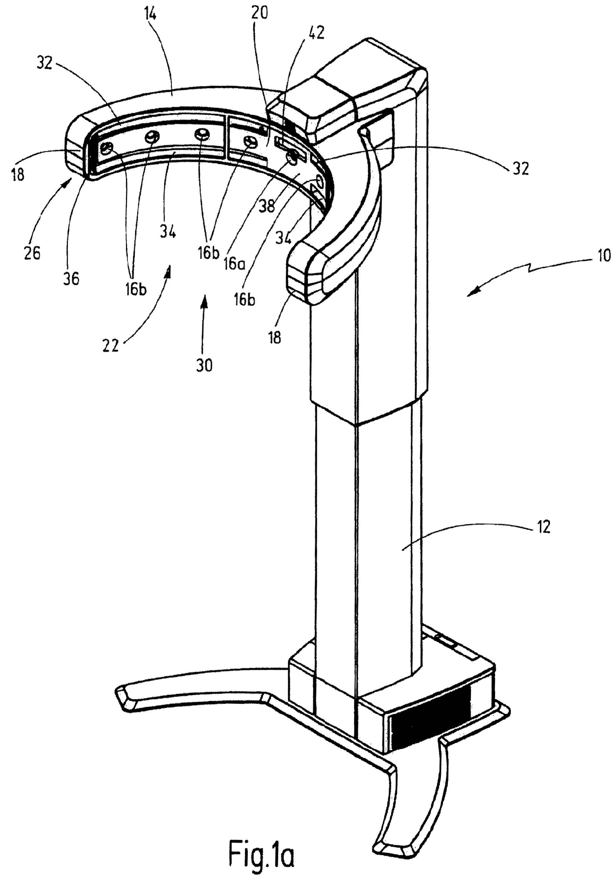

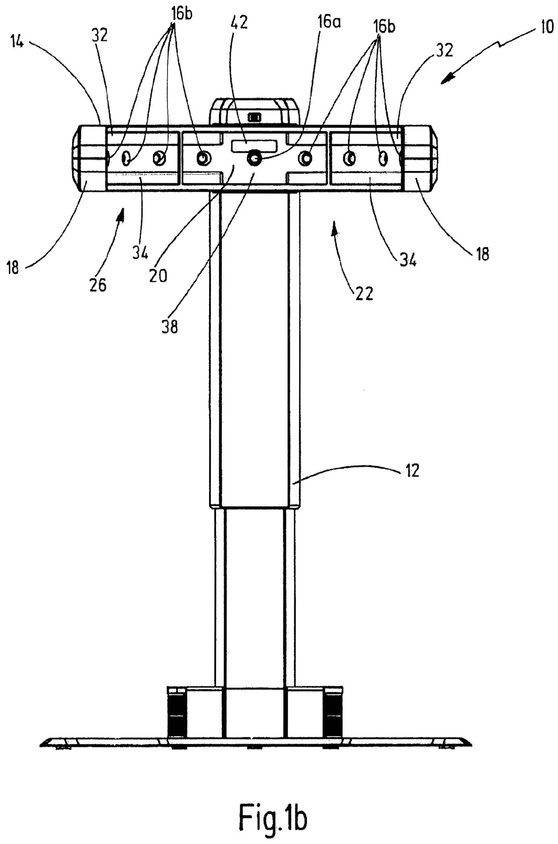

- Figur 1a, b: eine Vorrichtung zur Bestimmung von Zentrierparametern in perspektivischer Ansicht und in einer Ansicht von vorne;
- Figur 2: eine Veranschaulichung der Korrekturrechnung bei pupillenbasierter Bestimmung der Position des Hornhautscheitels;
- Figur 3a, b: eine Veranschaulichung der Korrekturrechnung bei reflexbasierter Bestimmung der Position des Hornhautscheitels;
- Figur 4a, b: Ansichten eines eine Brille tragendes Kopfes mit darauf projizierten genäherten Fassungskanten von vorne und von der Seite und
- Figur 5: eine schematische Darstellung von näherungsweise bestimmten Glasebenen.

Die in der Zeichnung dargestellte Vorrichtung 10 dient der Bestimmung von Zentrierparametern für die Brillenanpassung. Sie weist eine Säule 12 auf, die höhenverstellbar einen Kameraträger 14 trägt, welcher wiederum eine Anzahl Kameras 16a, 16b trägt. Der Kameraträger 14 ist in Draufsicht näherungsweise kreisförmig gebogen und erstreckt sich zwischen zwei freien Enden 18, welche im Abstand zueinander angeordnet sind. Nach vorne, also zur Säule 12 hin, und zu den Seiten umschließt eine Innenfläche 20 des Kameraträgers 14 einen Innenraum 22, in dem sich bei der Aufnahme von Bildern durch die Kameras 16a, 16b der Kopf eines Probanden befindet. Die Innenfläche 20 ist in einer Richtung, die zwischen den freien Enden 18 verläuft, konkav gebogen und weist beispielsweise die Form eines Abschnitts einer Zylindermantelfläche auf, wobei der Zylinder eine kreisrunde oder ovale Grundfläche haben kann. Um den Kameraträger 14 bezüglich des Kopfs des Probanden auf der richtigen Höhe positionieren zu können, ist in der Säule 12 eine nicht näher dargestellte Hubeinrichtung angeordnet, mit der der Kameraträger 14 motorisch angetrieben auf und ab bewegt werden kann.

Alle Kameras 16a, 16b sind in einer sich zwischen den freien Enden 18 erstreckenden Kameraanordnung 26 angeordnet. Im vorliegenden Ausführungsbeispiel ist die Kameraanordnung 26 als Kamerareihe 26 ausgebildet, deren Kameras 16a, 16b sich alle in derselben Höhe befinden, wobei ihre optischen Achsen auf den Innenraum 22 gerichtet sind. Im vorliegenden Ausführungsbeispiel umfasst die Kamerareihe 26 eine in der Mitte des Kameraträgers 14 angeordnete Frontkamera 16a, deren optische Achse frontal auf das Gesicht des Probanden gerichtet ist, sowie acht paarweise symmetrisch bezüglich einer durch die optische Achse der Frontkamera 16a verlaufenden senkrechten Symmetrieebene angeordnete Seitenkameras 16b von denen jeweils vier von links und von rechts auf das Gesicht des Probanden gerichtet sind. Die Kameras 16a, 16b sind zudem kalibriert, so dass sie gleichzeitig kalibrierte Bilder des Probanden aufnehmen können. Die Kalibrierung umfasst die extrinsischen Eigenschaften wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird.

Der Kameraträger 14 umschließt den Innenraum 22 nur nach vorne, zur Säule 12 hin, und zu den Seiten, also links und rechts des Kopfes des Probanden. Nach oben, unten sowie zu einer Rückseite 30 hin ist er offen, wobei die freien Enden 18 zueinander einen Abstand von mindestens 25cm aufweisen, so dass sich der Proband bequem von der Rückseite aus nähern kann. Im gezeigten Ausführungsbeispiel beträgt der Abstand 70 bis 80cm.

Zur Ausleuchtung des Innenraums 22 ist eine Beleuchtungseinrichtung mit einer oberhalb der Kamerareihe 26 verlaufenden oberen Lichtleiste 32 sowie einer unterhalb der Kamerareihe 26 verlaufenden unteren Lichtleiste 34 vorgesehen, welche jeweils eine Vielzahl von LEDs als Leuchtmittel aufweisen. Die obere Lichtleiste 32 und die untere Lichtleiste 34 erstrecken sich jeweils durchgehend oder mit Unterbrechungen über eine Länge, die mindestens so groß ist wie die Länge der in Umfangsrichtung zwischen den freien Enden 18 gemessenen Länge der Kamerareihe 26. Diese entspricht einem Umfangswinkel von mindestens 160 Grad. Nahe den freien Enden 18 sind die obere Lichtleiste 32 und die untere Lichtleiste 34 jeweils mittels einer vertikal verlaufenden weiteren Lichtleiste 36 miteinander verbunden. Die Kamerareihe 26 wird somit vollständig durch mindestens eine Reihe LEDs umrahmt. Die Vorrichtung 10 weist zudem eine in der Zeichnung nicht näher dargestellte Steuer- oder Regeleinrichtung auf, mit der die von den LEDs abgestrahlte Lichtintensität abhängig von der durch die Kameras 16a, 16b detektierten Lichtintensität gesteuert oder geregelt werden kann. Die LEDs der Lichtleisten 32, 34, 36 sind dabei zu Sektoren zusammengefasst, deren abgestrahlte Lichtintensitäten getrennt voneinander gesteuert bzw. geregelt werden können. Zudem ist vorgesehen, dass auch die von den einzelnen LEDs abgestrahlten Lichtintensitäten mittels der Steuer- oder Regeleinrichtung getrennt voneinander gesteuert oder geregelt werden können.

Um den Probanden richtig im Innenraum 22 positionieren zu können, sind die beiden der Frontkamera 16a nächstgelegenen Seitenkameras 16b dazu eingerichtet, den Abstand des Kopfs des Probanden von der Mitte 38 des Kameraträgers 14 zu messen. Mittels einer nicht näher dargestellten Anzeigeeinheit wird dem Probanden angezeigt, ob er richtig steht oder nicht. Die Anzeigeeinheit weist mehrere unterschiedlich eingefärbte Lichtquellen auf, die in einer Reihe angeordnet sind. Die mittlere Lichtquelle leuchtet grün, wenn der Proband richtig steht. Ausgehend von der mittleren Lichtquelle gibt es in jeder Richtung in dieser Reihenfolge eine gelbe, eine orangene und eine rote Lichtquelle, die entsprechend der Farbe anzeigt, wenn der Proband ein wenig, deutlich oder viel zu weit von der Mitte 38 des Kameraträgers 14 entfernt bzw. ein wenig, deutlich oder viel zu nah zur Mitte 38 steht. Um bei der Bestimmung der Zentrierparameter sicherzustellen, dass die Aufnahmerichtung des Probanden ins Unendliche gerichtet ist, ist eine am Kameraträger 14 angeordnete Fixationseinrichtung 42 vorgesehen, die ein Fixationsmuster für den Probanden in Form eines Specklemusters erzeugt. Das Fixationsmuster ist etwas höher angeordnet als die Frontkamera 16a, so dass der Proband über diese hinwegblickt. Damit kann sein Gesicht im größtmöglichen Umfang aufgenommen werden.

Die Vorrichtung 10 eignet sich insbesondere auch zur Herstellung eines Avatars des Kopfs des Probanden, welcher zur Bestimmung der Zentrierparameter herangezogen werden kann. Zum diesem Zweck werden durch die Kameras 16a, 16b kalibrierte Bilder des Kopfs des Probanden ohne Brille bzw. Brillenfassung aufgenommen. Mittels eines geeigneten Prozesses zur geometrischen Positionsbestimmung wie beispielsweise Triangulation wird aus den Bildern ein Tiefenprofil des Kopfes erstellt, das diesen näherungsweise sehr gut abbildet. Der Kopf wird durch eine Vielzahl von Punkten abgebildet, die mittels eines Netzmusters miteinander verbunden werden können oder aber als Punktwolke gespeichert werden können. Bei der anschließenden Bestimmung der Zentrierparameter kann der so ermittelte Avatar herangezogen werden, um Zentrierparameter zu bestimmen, die aufgrund der geometrischen Eigenschaften der Brille bzw. Brillenfassung, die der Proband trägt, nicht oder nur näherungsweise bestimmt werden können. Beispielsweise kann ein breiter Fassungsbügel das Auge in einer Seitenaufnahme soweit verdecken, dass der Hornhautscheitelabstand nicht oder nur sehr ungenau bestimmt werden kann. Zudem können gefärbte oder stark spiegelnde Gläser die Augen nicht oder nur sehr schlecht erkennen lassen. Um dem zu begegnen, wird auf die von den Kameras 16a, 16b aufgenommenen Bilder des die Brille oder Brillenfassung tragenden Probanden das Tiefenprofil des Avatars projiziert und die Zentrierparameter, die aufgrund der durch die Brille bzw. Brillenfassung eingeschränkten Sicht nur ungenügend bestimmt werden können, werden mittels der Bilddaten des Avatars bestimmt. Dabei kann eine Anpassung des Avatars auf die Bilder des die Brille bzw. Brillenfassung tragenden Probanden zur Minimierung von Abweichungen erfolgen.

Die oben beschriebene Vorrichtung 10 kann wie folgt für eine pupillenbasierte Detektion eines Hornhautscheitels ebenso wie für eine reflexbasierte Detektion eines Hornhautscheitels bei beiden Augen des Probanden eingesetzt werden.

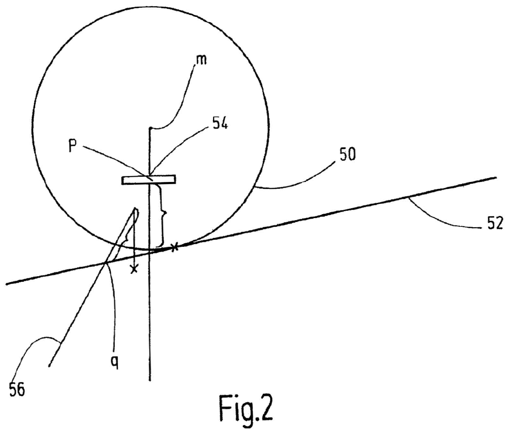

Bei der pupillenbasierten Methode gemäß Figur 2 wird zunächst die Position des Hornhautscheitels im Raum in erster Näherung als Schnittpunkt q eines die Hornhaut 50 tangierenden ersten Sichtstrahls 52 einer der ein Seitenbild des Probanden aufnehmenden Seitenkameras 16b mit einem auf die Pupille 54 gerichteten zweiten Sichtstrahl 56 der ein Frontbild des Probanden aufnehmenden Frontkamera 16a bestimmt. Mittels einer Korrekturrechnung wird eine korrigierte Position des Hornhautscheitels im Raum mittels der Gleichung a = q + µ * v + µ * w berechnet. Dabei ist µ ein Erfahrungswert für den Abstand zwischen dem Pupillenzentrum und dem Hornhautscheitel, der regelmäßig Werte zwischen 2,5mm und 4mm annimmt. v ist ein Einheitsvektor der Raumrichtung vom Pupillenzentrum p zur Frontkamera 16a, deren Koordinaten mit der Variable c1 angegeben werden, und errechnet sich als v = (p-c1) /| p - c1 |. w ist ein Einheitsvektor der durch das Zentrum m der Hornhautkugel verlaufenden Aufnahmerichtung, die auf das Fixationsmuster der Fixationseinrichtung 42 am Raumpunkt t gerichtet ist, und errechnet sich zu w = (t - m) /| t - m |. Alle Werte a, q, p, c1, t und m sind dreidimensionale Vektoren.

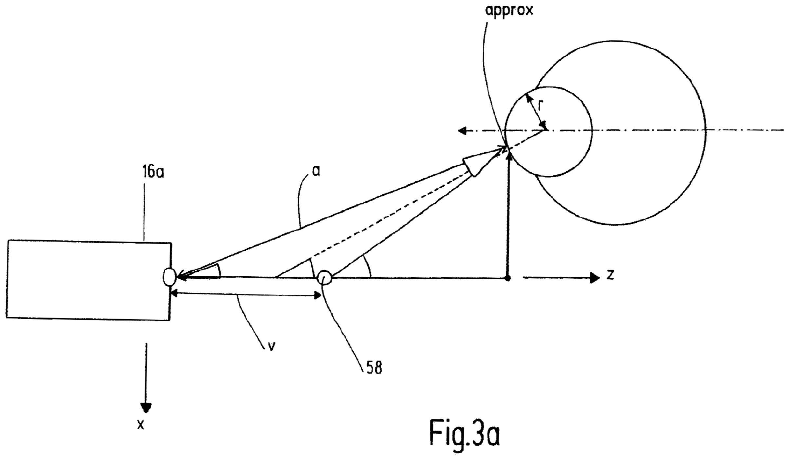

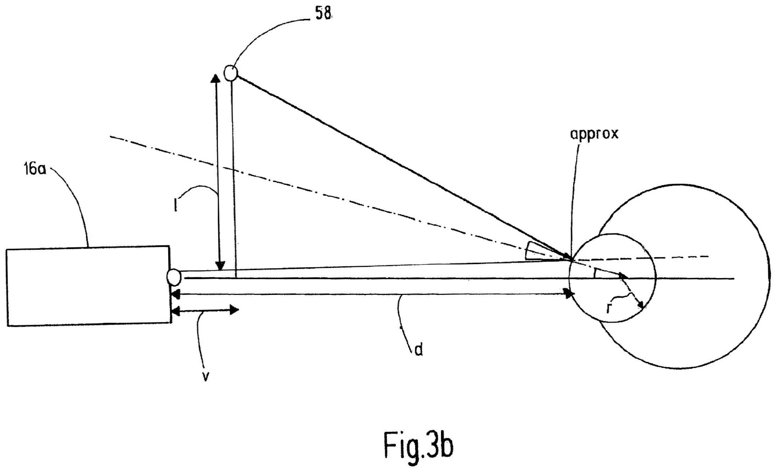

Bei der reflexbasierten Bestimmung der Position des Hornhautscheitels gemäß Figur 3a, 3b sind zwei Korrekturrechnungen vorzunehmen, wobei die erste Korrekturrechnung (Figur 3a) eine Korrektur in x-Richtung, die zweite Korrektur (Figur 3b) eine Korrektur in y-Richtung betrifft. Diese Raumrichtungen werden durch ein inneres Koordinatensystem der Frontkamera 16a festgelegt, das seinen Nullpunkt im optischen Zentrum der Frontkamera 16a hat. Die z-Richtung wird dabei durch die Aufnahmerichtung der Frontkamera 16a festgelegt, die x-Richtung ist eine Richtung, die horizontal sowie orthogonal zur z-Richtung verläuft und in deren Richtung betrachtet nach rechts weist, und die y-Richtung verläuft orthogonal zur x-Richtung und zur z-Richtung und weist im Raum nach oben. Bei der reflexbasierten Messung wird mittels einer Lichtquelle, im vorliegenden Fall einer LED 58 ein Lichtblitz ausgesandt, dessen Reflexion auf der Hornhaut von der Frontkamera 16a und mindestens einer der Seitenkameras 16b detektiert wird und die erste Näherung für die Position des Hornhautscheitels im Raum bildet. Der Reflexpunkt wird in Figur 3a, 3b mit "approx" bezeichnet. In x-Richtung wird eine Korrektur durch Addition von Δx =+/ -r * sin (½ * (arccos z/a + arctan x/(z-v))) zur x-Koordinate des Reflexpunkts approx vorgenommen, wobei das Pluszeichen bei der Anwendung auf das linke Auge, das Minuszeichen bei der Anwendung auf das rechte Auge (vgl. Figur 3a) zu verwenden ist. r ist dabei ein Erfahrungswert für den Hornhautradius, der typischerweise ca. 8mm beträgt. a ist der Abstand des optischen Zentrums der Frontkamera 16a zum Reflexpunkt approx und v ist der Abstand der LED 58 zum optischen Zentrum der Frontkamera 16a in z-Richtung. x und z wiederum sind die Koordinaten in x- und z-Richtung.

In y-Richtung wird ausgehend vom Reflexpunkt approx eine Korrektur mittels Addition von Δy =+/ -r * sin ½ * (arctan l/(d-v)) vorgenommen. r ist wiederum der Erfahrungswert für den Hornhautradius, d ist der Abstand des optischen Zentrums der Frontkamera 16a zum Reflexpunkt approx in z-Richtung, v ist der Abstand der LED 58 zum optischen Zentrum der Frontkamera 16a in z-Richtung und l ist der Abstand der LED 58 vom optischen Zentrum der Frontkamera 16a in y-Richtung. Das Pluszeichen kommt zur Anwendung, wenn die LED 58 unter der Frontkamera 16a angeordnet ist, also ihre y-Koordinate kleiner ist als die y-Koordinate der Frontkamera 16a bzw. ihres optischen Zentrums. Ist die LED über der Frontkamera 16a angeordnet, so kommt das Minuszeichen zum Einsatz.

Bei den beschriebenen Verfahren kann die Pupille bzw. der Reflexpunkt approx beispielsweise mittels Merkmalsextraktion, mittels Merkmalsmatching und/oder mittels maschinellem Lernen durch Vergleich mit einer Vielzahl vorbekannter Daten detektiert werden. Diesem Detektionsschritt kann ein Schritt vorangehen, bei dem ein Gesichtsdetektor erkennt, welche Bildpunkte zum Gesicht des Probanden bzw. zu seiner Augenpartie gehören, so dass nach der Pupille bzw. dem Reflexpunkt approx bereits eingegrenzt gesucht werden kann.

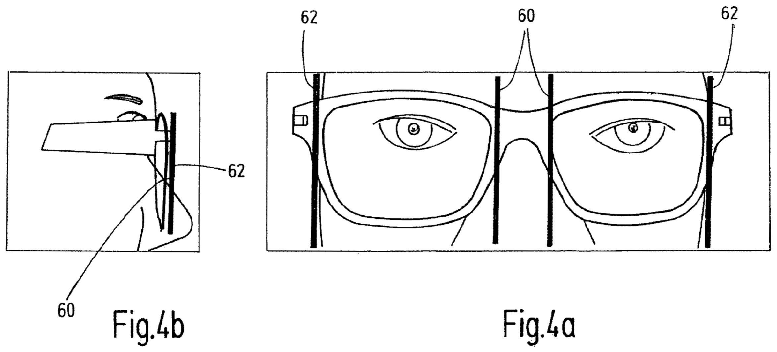

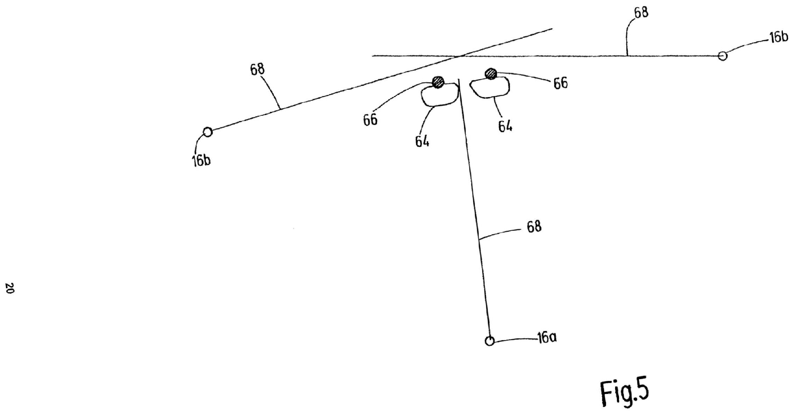

Die Position des Hornhautscheitels im Raum wird zur Bestimmung der Zentrierparameter bei der Brillenanpassung verwendet. Mittels der von den Kameras 16a, 16b aufgenommenen kalibrierten Bilder werden durch geometrische Positionsbestimmung, insbesondere durch Triangulation oder Epipolargeometrie, geometrische Parameter ermittelt, die die Geometrie der Brillenfassung beschreiben. Diese umfassen die nasalen und temporalen Fassungsränder 60, 62, wie in Figur 4a, 4b beispielhaft angedeutet. An die die nasalen und temporalen Fassungsränder 60, 62 beschreibenden Parameter werden Ebenen 64 als Näherung für die Flächen der in der Brillenfassung aufzunehmenden Brillengläser angepasst. Figur 5 zeigt schematisch die ebenen 64 vor der jeweiligen, näherungsweise dargestellten Hornhaut 66 mit schematisch dargestellten Sichtstrahlen 68 der Kameras 16a, 16b. Zu guter Letzt werden aus den gewonnenen Daten die Zentrierparameter berechnet.

## Patentansprüche

1. Computerimplementiertes Verfahren zur Bestimmung von Zentrierparametern, wobei mindestens zwei aus unterschiedlichen Aufnahmerichtungen aufgenommene zueinander kalibrierte Bilder des die Brillenfassung tragenden Kopfes bereitgestellt werden, wobei aus den Bildern mittels geometrischer Positionsbestimmung geometrische Parameter ermittelt werden, die die Position der Augen beschreiben, und wobei aus den Bildern mittels geometrischer Positionsbestimmung geometrische Parameter ermittelt werden, die die Geometrie der Brillenfassung beschreiben, wobei an die die Geometrie der Brillenfassung beschreibenden geometrischen Parameter ein dreidimensionales Modell für die in der Brillenfassung aufzunehmenden Brillengläser angepasst wird, wobei an die die Geometrie der Brillenfassung beschreibenden Parameter Ebenen oder Linearkombinationen von Flächen n-ter Ordnung als Näherung für die Flächen der in der Brillenfassung aufzunehmenden Brillengläser angepasst werden und wobei aus den geometrischen Parametern, die die Position der Augen beschreiben, aus den geometrischen Parametern, die die Geometrie der Brillenfassung beschreiben und aus dem dreidimensionalen Modell Zentrierparameter berechnet werden,
**dadurch gekennzeichnet,**
**dass** mindestens drei gleichzeitig aus unterschiedlichen Aufnahmerichtungen aufgenommene zueinander kalibrierte Bilder des Kopfes bereitgestellt werden. wobei ein Frontbild den Kopf von vorne abbildet und jeweils ein Seitenbild den Kopf von links und von rechts abbildet, wobei die Aufnahmerichtungen der Seitenbilder mit der Aufnahmerichtung des Frontbilds jeweils einen Winkel von mehr als 60 Grad und höchstens 120 Grad einschließen.

2. Computerimplementiertes Verfahren nach Anspruch 1, **dadurch gekennzeichnet, dass** die Flächen n-ter Ordnung mindestens eine Ebene und/oder mindestens ein Paraboloid umfassen.

3. Computerimplementiertes Verfahren nach einem der vorangehenden Ansprüche, **dadurch gekennzeichnet, dass** an die die Geometrie der Brillenfassung beschreibenden Parameter jeweils eine Ebene (64) als Näherung für die Fläche jedes der in der Brillenfassung aufzunehmenden Brillengläser oder jedes die Brillengläser aufnehmenden Brillenfassungsrands angepasst wird.

4. Computerimplementiertes Verfahren nach einem der vorangehenden Ansprüche, **dadurch gekennzeichnet, dass** mindestens zwei gleichzeitig aus unterschiedlichen Aufnahmerichtungen aufgenommene zueinander kalibrierte Bilder des die Brillenfassung tragenden Kopfes bereitgestellt werden.

5. Computerimplementiertes Verfahren nach einem der vorangehenden Ansprüche, **dadurch gekennzeichnet, dass** die die Geometrie der Brillenfassung beschreibenden geometrischen Parameter die durch Geraden angenäherten nasalen und/oder temporalen Fassungsränder beschreibende Parameter umfassen und dass das dreidimensionale Modell an die die nasalen und/oder temporalen Fassungsränder beschreibenden Parameter angepasst wird.

6. Computerimplementiertes Verfahren zur Bestimmung von Zentrierparametern, wobei mindestens zwei aus unterschiedlichen Aufnahmerichtungen aufgenommene zueinander kalibrierte Bilder des die Brillenfassung tragenden Kopfes bereitgestellt werden, wobei aus den Bildern mittels geometrischer Positionsbestimmung geometrische Parameter ermittelt werden, die die Position der Augen beschreiben, und wobei aus den Bildern mittels geometrischer Positionsbestimmung geometrische Parameter ermittelt werden, die die Geometrie der Brillenfassung beschreiben, wobei an die die Geometrie der Brillenfassung beschreibenden geometrischen Parameter ein dreidimensionales Modell für die in der Brillenfassung aufzunehmenden Brillengläser angepasst wird, wobei die die Geometrie der Brillenfassung beschreibenden geometrischen Parameter die nasalen und/oder temporalen Fassungsränder beschreibende Parameter umfassen, wobei das dreidimensionale Modell an die die nasalen und/oder temporalen Fassungsränder beschreibenden Parameter angepasst wird und wobei aus den geometrischen Parametern, die die Position der Augen beschreiben, und aus den geometrischen Parametern, die die Geometrie der Brillenfassung beschreiben und aus dem dreidimensionalen Modell Zentrierparameter berechnet werden,
**dadurch gekennzeichnet,**
**dass** mindestens drei gleichzeitig aus unterschiedlichen Aufnahmerichtungen aufgenommene zueinander kalibrierte Bilder des Kopfes bereitgestellt werden, wobei ein Frontbild den Kopf von vorne abbildet und jeweils ein Seitenbild den Kopf von links und von rechts abbildet, wobei die Aufnahmerichtungen der Seitenbilder mit der Aufnahmerichtung des Frontbilds jeweils einen Winkel von mehr als 60 Grad und höchstens 120 Grad einschließen.

7. Computerimplementiertes Verfahren nach Anspruch 6, **dadurch gekennzeichnet, dass** an die die nasalen und/oder temporalen Fassungsränder beschreibenden Parameter Ebenen oder Linearkombinationen von Flächen n-ter Ordnung als Näherung für die Flächen der in der Brillenfassung aufzunehmenden Brillengläser angepasst werden.

8. Computerimplementiertes Verfahren nach einem der vorangehenden Ansprüche, **dadurch gekennzeichnet, dass** die die Position der Augen beschreibenden geometrischen Parameter die Position des Hornhautscheitels im Raum umfassen.

9. Computerimplementiertes Verfahren nach Anspruch 8, **dadurch gekennzeichnet, dass** die Position des Hornhautscheitels einer Korrekturrechnung unterzogen wird.

10. Computerimplementiertes Verfahren nach Anspruch 8 oder 9, **dadurch gekennzeichnet, dass** die Position des Hornhautscheitels im Raum in einer ersten Näherung als Schnittpunkt q eines die Hornhaut (50) tangierenden ersten Sichtstrahls (52) einer das Seitenbild aufnehmenden Seitenkamera (16b) mit einem auf die Pupille (54) gerichteten zweiten Sichtstrahl (56) einer das Frontbild aufnehmenden Frontkamera (16a) bestimmt wird.

11. Computerimplementiertes Verfahren nach Anspruch 8 und nach Anspruch 9, **dadurch gekennzeichnet, dass** mittels der Korrekturrechnung die Position des Hornhautscheitels gemäß a = q + µ * v + µ * w berechnet wird, wobei a der Positionsvektor des Hornhautscheitels im Raum nach Durchführung der Korrekturrechnung, q die Position des Hornhautscheitels in erster Näherung, µ ein Erfahrungswert oder ein tatsächlicher Wert für den Abstand zwischen dem Pupillenzentrum und dem Hornhautscheitel, v ein Einheitsvekto r der Raumrichtung vom Pupillenzentrum zur Frontkamera und w ein Einheitsvektor der durch das Zentrum der Hornhautkugel verlaufenden Aufnahmerichtung ist.

12. Computerimplementiertes Verfahren nach einem der Ansprüche 1 bis 8, **dadurch gekennzeichnet, dass** bei der Aufnahme der Bilder ein Lichtblitz erzeugt wird und dass die Position des Hornhautscheitels im Raum in einer ersten Näherung als die Position des Reflexpunkts des Lichtblitzes auf der Hornhaut bestimmt wird.

13. Computerimplementiertes Verfahren nach Anspruch 8 und nach Anspruch 9, **dadurch gekennzeichnet, dass** mittels der Korrekturrechnung die Position des Hornhautscheitels in horizontaler Richtung ausgehend vom Reflexpunkt mittels Addition von Δ x =+/ -r * sin (½ * (arccos z/a + arctan x/(z-v))) zur x-Koordinate berechnet wird, wobei r ein Erfahrungswert oder ein tatsächlicher Wert für den Hornhautradius, a der Abstand des optischen Zentrums einer das Frontbild aufnehmenden Frontkamera (16a) zum Reflexpunkt, x und z die x- und z-Koordinaten des Reflexpunkts in einem Koordinatensystem mit dem Nullpunkt im optischen Zentrum der Frontkamera (16a), wobei die Aufnahmerichtung der Frontkamera der z-Richtung entspricht und die x-Richtung horizontal orthogonal zur z-Richtung steht und in z-Richtung betrachtet nach rechts weist, und v der Abstand der den Lichtblitz erzeugenden Lichtquelle (58) vom optischen Zentrum der Frontkamera (16a) in z-Richtung ist.

14. Computerimplementiertes Verfahren nach Anspruch 8 und nach Anspruch 9 oder 10, **dadurch gekennzeichnet, dass** mittels der Korrekturrechnung die Position des Hornhautscheitels in y-Richtung ausgehend vom Reflexpunkt mittels Addition von Δy =+/ -r * sin ½ * (arctan I/(d-v)) berechnet wird, wobei r ein Erfahrungswert oder ein tatsächlicher Wert für den Hornhautradius, d der Abstand des optischen Zentrums der Frontkamera (16a) zum Reflexpunkt in z-Richtung, v der Abstand der den Lichtblitz erzeugenden Lichtquelle (58) vom optischen Zentrum der Frontkamera (16a) in z-Richtung und I der Abstand der Lichtquelle (58) vom optischen Zentrum der Frontkamera (16a) in y-Richtung ist, wobei die y-Richtung orthogonal zur x-Richtung und zur z-Richtung ist und im Raum nach oben weist.

15. Computerprogramm mit Programmcode zur Durchführung aller Verfahrensschritte nach einem der Ansprüche 1 bis 14, wenn das Computerprogramm in einem Computer geladen und in einem Computer ausgeführt wird.

16. Computerimplementiertes Verfahren nach einem der Ansprüche 1 bis 14 unter Verwendung einer Vorrichtung (10), wobei die Vorrichtung (10) einen Kameraträger (14) aufweist, welcher einen nach oben, nach unten und zu einer Rückseite (30) hin offenen Innenraum (22) teilweise umschließt und mindestens drei Kameras (16a, 16b) trägt, die zwischen zwei freien Enden (18) des Kameraträgers (14) angeordnet und auf den Innenraum (22) gerichtet sind, wobei der Kameraträger (14) zur Beleuchtung des Innenraums (22) eine Beleuchtungseinrichtung (32, 34, 36) aufweist.

17. Verfahren zum Zentrieren mindestens eines Brillenglases in einer Brillenfassung, **dadurch gekennzeichnet, dass** in einem ersten Verfahrensschritt Zentrierparameter mit einem Verfahren nach einem der Ansprüche 1 bis 12 bestimmt werden und dass in einem zweiten Verfahrensschritt das mindestens eine Brillenglas mit den im ersten Verfahrensschritt bestimmten Zentrierparametern in der Brillenfassung zentriert wird.

18. Verfahren zum Einschleifen mindestens eines Brillenglases in eine Brillenfassung, **dadurch gekennzeichnet, dass** in einem ersten Verfahrensschritt Zentrierparameter mit einem Verfahren nach einem der Ansprüche 1 bis 14 bestimmt werden und dass in einem zweiten Verfahrensschritt das mindestens eine Brillenglas basierend auf den im ersten Verfahrensschritt bestimmten Zentrierparametern für eine Anordnung in der Brillenfassung eingeschliffen wird.

19. Verfahren zum Herstellen eines Brillenglases, **gekennzeichnet durch** den Verfahrensschritt Einschleifen des Brillenglases in eine Brillenfassung nach dem Verfahren gemäß Anspruch 18.

20. Verfahren zum Herstellen einer Brille, **dadurch gekennzeichnet, dass** ein Verfahren nach einem der Ansprüche 17 bis 19 verwendet wird.

21. Vorrichtung zur Bestimmung von Zentrierparametern zur Anpassung von Brillengläsern an eine vorgegebene Brillenfassung und an den Kopf eines Probanden mit einer ersten Kamera zur Aufnahme eines ersten Bilds aus einer ersten Blickrichtung, mit mindestens einer zur ersten Kamera kalibrierten zweiten Kamera zur Aufnahme eines zweiten Bilds aus einer von der ersten Blickrichtung verschiedenen zweiten Blickrichtung und mit einem Computer, welcher einen Speicher umfasst, in dem ein Computerprogramm gespeichert ist, das einen Programmcode zur Durchführung aller Verfahrensschritte nach einem der Ansprüche 1 bis 14 aufweist, wobei der Computer einen Prozessor umfasst, um das im Speicher gespeicherte Computerprogramm auszuführen.

## Claims

1. Computer-implemented method for determining centration parameters, wherein at least two images of the head wearing the spectacle frame, which are calibrated to one another and recorded from different recording directions, are provided, wherein geometric parameters describing the position of the eyes are ascertained from the images by means of geometric position determination, and wherein geometric parameters describing the geometry of the spectacle frame are ascertained from the images by means of geometric position determination, wherein in that a three-dimensional model for the spectacle lenses to be received in the spectacle frame is fitted to the geometric parameters describing the geometry of the spectacle frame, wherein in that planes or linear combinations of surfaces of n-th order are fitted to the parameters describing the geometry of the spectacle frame as an approximation for the surfaces of the spectacle lenses to be received in the spectacle frame and in that centration parameters are calculated from the geometric parameters describing the position of the eyes, from the geometric parameters describing the geometry of the spectacle frame and from the three-dimensional model
**characterized in that**
at least three images of the head, which are calibrated to one another and recorded at the same time from different recording directions, are provided, wherein a frontal image images the head from the front and a lateral image in each case images the head from the left and from the right, wherein the recording directions of the lateral images each include an angle of more than 60 degrees and no more than 120 degrees with the recording direction of the frontal image.

2. Computer-implemented method according to Claim 1, **characterized in that** the surfaces of n-th order comprise at least one plane and/or at least one paraboloid.

3. Computer-implemented method according to either of the preceding claims, **characterized in that** a plane (64) is respectively fitted to the parameters describing the geometry of the spectacle frame, as an approximation for the surface of each of the spectacle lenses to be received in the spectacle frame or each spectacle frame edge receiving the spectacle lenses.

4. Computer-implemented method according to any one of the preceding claims, **characterized in that** at least two images of the head wearing the spectacle frame, which are calibrated to one another and recorded at the same time from different recording directions, are provided.

5. Computer-implemented method according to any one of the preceding claims, **characterized in that** the geometric parameters describing the geometry of the spectacle frame comprise parameters describing the nasal and/or temporal frame edges approximated by straight lines and **in that** the three-dimensional model is fitted to the parameters describing the nasal and/or temporal frame edges.

6. Computer-implemented method for determining centration parameters, wherein at least two images of the head wearing the spectacle frame, which are calibrated to one another and recorded from different recording directions, are provided, wherein geometric parameters describing the position of the eyes are ascertained from the images by means of geometric position determination, and wherein geometric parameters describing the geometry of the spectacle frame are ascertained from the images by means of geometric position determination, wherein a three-dimensional model for the spectacle lenses to be received in the spectacle frame is fitted to the geometric parameters describing the geometry of the spectacle frame, wherein the geometric parameters describing the geometry of the spectacle frame comprise parameters describing the nasal and/or temporal frame edges, wherein the three-dimensional model is fitted to the parameters describing the nasal and/or temporal frame edges and wherein centration parameters are calculated from the geometric parameters describing the position of the eyes, the geometric parameters describing the geometry of the spectacle frame and the three-dimensional model
**characterized in that**
at least three images of the head, which are calibrated to one another and recorded at the same time from different recording directions, are provided, wherein a frontal image images the head from the front and a lateral image in each case images the head from the left and from the right, wherein the recording directions of the lateral images each include an angle of more than 60 degrees and no more than 120 degrees with the recording direction of the frontal image.

7. Computer-implemented method according to Claim 6, **characterized in that** planes or linear combinations of surfaces of n-th order are fitted to the parameters describing the nasal and/or temporal frame edges as an approximation for the surfaces of the spectacle lenses to be received in the spectacle frame.

8. Computer-implemented method according to any one of the preceding claims, **characterized in that** the geometric parameters describing the position of the eyes comprise the position of the corneal vertex in space.

9. Computer-implemented method according to Claim 8, **characterized in that** the position of the corneal vertex is subjected to a correction calculation.

10. Computer-implemented method according to Claim 8 or 9, **characterized in that** the position of the corneal vertex in space is determined to a first approximation as the point of intersection q of a first view ray (52), tangential to the cornea (50), from a lateral camera (16b) recording the lateral image with a second view ray (56), directed onto the pupil (54), from a frontal camera (16a) recording the frontal image.

11. Computer-implemented method according to Claim 8 and according to Claim 9, **characterized in that** the position of the corneal vertex is calculated according to a = q + u * v + u * w by means of the correction calculation, where a denotes the position vector of the corneal vertex in space after carrying out the correction calculation, q denotes the position of the corneal vertex to a first approximation, p denotes an empirical value or an actual value for the distance between the pupil centre and the corneal vertex, v denotes a unit vector in the spatial direction from the pupil centre to the frontal camera and w denotes a unit vector in the recording direction extending through the centre of the corneal sphere.

12. Computer-implemented method according to any one of Claims 1 to 8, **characterized in that** a flash is produced when recording the images and **in that** the position of the corneal vertex in space is determined to a first approximation as the position of the reflection point of the flash on the cornea.

13. Computer-implemented method according to Claim 8 and according to Claim 9, **characterized in that** the position of the corneal vertex in the horizontal direction proceeding from the reflection point is calculated by means of the correction calculation by adding Δx =+/ -r * sin (½ * (arccos z/a + arctan x/ (z-v))) to the x-coordinate, where r denotes an empirical value or an actual value for the corneal radius, a denotes the distance between the optical centre of a frontal camera (16a) recording the frontal image and the reflection point, x and z denote the x- and z-coordinates of the reflection point in a coordinate system with the origin at the optical centre of the frontal camera (16a), wherein the recording direction of the frontal camera corresponds to the z-direction and the x-direction is horizontally orthogonal to the z-direction and, when observed in the z-direction, points to the right, and denotes the distance between the light source (58) producing the flash and the optical centre of the frontal camera (16a) in the z-direction.

14. Computer-implemented method according to Claim 8 and according to Claim 9 or 10, **characterized in that** the position of the corneal vertex in the y-direction proceeding from the reflection point is calculated by means of the correction calculation by adding Δy =+/ -r * sin ½* (arctan I/(d-v)), where r denotes an empirical value or an actual value for the corneal radius, d denotes the distance between the optical centre of the frontal camera (16a) and the reflection point in the z-direction, v denotes the distance between the light source (58) producing the flash and the optical centre of the frontal camera (16a) in the z-direction and I denotes the distance between the light source (58) and the optical centre of the frontal camera (16a) in the y-direction, wherein the y-direction is orthogonal to the x-direction and to the z-direction and points upward in space.

15. Computer program with program code for carrying out all of the method steps according to any one of Claims 1 to 14, when the computer program is loaded onto a computer and executed on a computer.

16. Computer-implemented method according to any one of Claims 1 to 14 using an apparatus (10), wherein the apparatus (10) has a camera carrier (14), which partly encloses an interior (22) that is open to the top, to the bottom and to a rear side (30) and which carries at least three cameras (16a, 16b) which are arranged between two free ends (18) of the camera carrier (14) and directed onto the interior (22), wherein the camera carrier (14) has an illumination device (32, 34, 36) for illuminating the interior (22).

17. Method for centring at least one spectacle lens in a spectacle frame, **characterized in that**, in a first method step, centration parameters are determined using a method according to any one of Claims 1 to 12, and **in that**, in a second method step, the at least one spectacle lens is centred in the spectacle frame using the centration parameters determined in the first method step.

18. Method for grinding at least one spectacle lens into a spectacle frame, **characterized in that**, in a first method step, centration parameters are determined using a method according to any one of Claims 1 to 14, and **in that**, in a second method step, the at least one spectacle lens is ground on the basis of the centration parameters determined in the first method step for an arrangement in the spectacle frame.

19. Method for producing a spectacle lens, **characterized by** the method step of grinding the spectacle lens into a spectacle frame according to the method according to Claim 18.

20. Method for producing spectacles, **characterized in that** use is made of a method according to any one of Claims 17 to 19.

21. Apparatus for determining centration parameters for fitting spectacle lenses to a given spectacle frame and to the head of a subject, with a first camera for recording a first image from a first viewing direction, with at least one second camera, calibrated to the first camera, for recording a second image from a second viewing direction that differs from the first viewing direction and with a computer comprising a memory in which a computer program is stored, said computer program having program code for carrying out all of the method steps according to any one of Claims 1 to 14, wherein the computer comprises a processor to execute the computer program stored in the memory.

## Revendications

1. Procédé informatisé de détermination de paramètres de centrage, au moins deux images de la tête portant la monture de lunettes étant fournies qui sont étalonnées l'une par rapport à l'autre et acquises depuis des directions d'acquisition différentes, des paramètres géométriques, qui décrivent la position des yeux, étant déterminés à partir des images par détermination de positions géométriques et des paramètres géométriques, qui décrivent la géométrie de la monture de lunettes, étant déterminés à partir des images par détermination de positions géométriques, un modèle tridimensionnel, destiné à des verres de lunettes qui doivent être reçus dans la monture de lunettes, étant adapté aux paramètres géométriques décrivant la géométrie de la monture de lunettes, des plans ou des combinaisons linéaires de surfaces de n-ième ordre étant adapté (e)s aux paramètres décrivant la géométrie de la monture de lunettes en tant qu'approximation des surfaces des verres de lunettes qui doivent être reçus dans la monture de lunettes, et des paramètres de centrage étant calculés à partir des paramètres géométriques qui décrivent la position des yeux, des paramètres géométriques qui décrivent la géométrie de la monture de lunettes et du modèle tridimensionnel
**caractérisé en ce qu'**
au moins trois images de la tête sont fournies qui sont étalonnées les unes par rapport aux autres et qui sont acquises simultanément depuis des directions d'acquisition différentes, une image frontale reproduisant la tête depuis l'avant et des images latérales reproduisant la tête depuis la gauche respectivement depuis la droite, les directions d'acquisition des images latérales étant formant chacune avec la direction d'acquisition de l'image frontale un angle de plus de 60 degrés et de 120 degrés maximum.

2. Procédé informatisé selon la revendication 1, **caractérisé en ce que** les surfaces de n-ième ordre comprennent au moins un plan et/ou au moins un paraboloide.

3. Procédé informatisé selon l'une des revendications précédentes, **caractérisé en ce qu'**un plan (64) est adapté à chacun des paramètres, décrivant la géométrie de la monture de lunettes, en tant qu'approximation de la surface de chacun des verres de lunettes qui doivent être reçus dans la monture de lunettes ou de chaque bord de monture de lunettes qui reçoit les verres de lunettes.

4. Procédé informatisé selon l'une des revendications précédentes, **caractérisé en ce qu'**au moins deux images de la tête portant la monture de lunettes sont fournies qui sont étalonnées l'une par rapport à l'autre et qui sont acquises simultanément depuis des directions d'acquisition différentes.

5. Procédé informatisé selon l'une des revendications précédentes, **caractérisé en ce que** les paramètres géométriques décrivant la géométrie de la monture de lunettes comprennent les paramètres décrivant les bords de monture nasaux et/ou temporaux approchés par des lignes droites et **en ce que** le modèle tridimensionnel est adapté aux paramètres décrivant les bords de monture nasaux et/ou temporaux.

6. Procédé informatisé de détermination de paramètres de centrage, au moins deux images de la tête qui porte la monture de lunettes étant fournies qui sont étalonnées l'une par rapport à l'autre et qui sont acquises depuis des directions d'acquisition différentes, des paramètres géométriques qui décrivent la position des yeux étant déterminés à partir des images par détermination de positions géométriques, et des paramètres géométriques qui décrivent la géométrie de la monture de lunettes étant déterminés à partir des images par détermination de positions géométriques, un modèle tridimensionnel des verres de lunettes qui doivent être reçus dans la monture de lunettes étant adapté aux paramètres géométriques décrivant la géométrie de la monture de lunettes, les paramètres géométriques décrivant la géométrie de la monture de lunettes comprenant les paramètres décrivant les bords nasaux et/ou temporaux de la monture, le modèle tridimensionnel étant adapté aux paramètres décrivant les bords nasaux et/ou temporaux de la monture et les paramètres de centrage étant calculés à partir des paramètres géométriques qui décrivent la position des yeux, des paramètres géométriques qui décrivent la géométrie de la monture de lunettes et du modèle tridimensionnel
**caractérisé en ce qu'**
au moins trois images de la tête sont fournies qui sont étalonnées les unes par rapport aux autres et qui sont acquises simultanément depuis des directions d'acquisition différentes, une image frontale reproduisant la tête depuis l'avant et des images latérales reproduisant la tête depuis la gauche respectivement depuis la droite, les directions d'acquisition des images latérales formant chacune avec la direction d'acquisition de l'image frontale un angle de plus de 60 degrés et de 120 degrés maximum.

7. Procédé informatisé selon la revendication 6, **caractérisé en ce que** des plans ou des combinaisons linéaires de surfaces de n-ième ordre sont adapté(e)s aux paramètres décrivant les bords nasaux et/ou temporaux de la monture en tant qu'approximation des surfaces des verres qui doivent être montés dans la monture de lunettes.

8. Procédé informatisé selon l'une des revendications précédentes, **caractérisé en ce que** les paramètres géométriques décrivant la position des yeux comprennent la position dans l'espace de l'apex cornéen.

9. Procédé informatisé selon la revendication 8, **caractérisé en ce que** la position de l'apex cornéen est soumise à un calcul de correction.

10. Procédé informatisé selon la revendication 8 ou 9, **caractérisé en ce que** la position dans l'espace de l'apex cornéen est déterminée en première approximation comme étant le point d'intersection q d'un premier rayon optique (52), tangent à la cornée (50), d'une caméra latérale (16b) faisant l'acquisition de l'image latérale et d'un deuxième rayon optique (56), dirigé sur la pupille (54), d'une caméra frontale (16a) faisant l'acquisition de l'image frontale.

11. Procédé informatisé selon la revendication 8 et la revendication 9, **caractérisé en ce que** la position de l'apex cornéen est calculée au moyen du calcul de correction selon a = q + u * v + u* w, où a est le vecteur de position dans l'espace de l'apex cornéen après que le calcul de correction a été effectué, q est la position de l'apex cornéen en première approximation, p est une valeur empirique ou une valeur réelle de la distance entre le centre de la pupille et l'apex cornéen, v est le vecteur unitaire de la direction spatiale du centre de la pupille à la camera frontale et w est un vecteur unitaire de la direction d'acquisition passant par le centre de la sphere cornéenne.

12. Procédé informatisé selon l'une des revendications 1 à 8, **caractérisé en ce qu'**un flash lumineux est généré lors de l'acquisition des images et **en ce que** la position dans l'espace de l'apex cornéen est déterminée en première approximation comme étant la position du point de réflexion du flash lumineux sur la cornée.

13. Procédé informatisé selon la revendication 8 et la revendication 9, **caractérisé en ce que** la position de 1'apex cornéen dans la direction horizontale est calculée au moyen du calcul de correction à partir du point de réflexion par addition de Δx = +/-r * sin (½ * ( arccos z/a + arctan x/(z-v))) par rapport à la coordonnée x, où r est une valeur empirique ou une valeur réelle du rayon de la cornée, a est la distance entre le centre optique d'une caméra frontale (16a), faisant l'acquisition de l'image frontale, et le point de réflexion, x et z sont les coordonnées x et z du point de réflexion dans un système de coordonnées don't le point zéro est le centre optique de la camera frontale (16a), la direction d'acquisition de la camera frontale correspond à la direction z, et la direction x est horizontale et orthogonale à la direction z, et pointe vers la droite lorsque 1'on regarde dans la direction z, et v est la distance entre la source de lumière (58), générant le flash de lumière, et le centre optique de la caméra frontale (16a) dans la direction z.

14. Procédé informatisé selon la revendication 8 et selon la revendication 9 ou 10, **caractérisé en ce que** la position de l'apex cornéen dans la direction y est calculée au moyen du calcul de correction à partir du point de réflexion par addition de Δy = +/- r* sin ½ (arctan I/(d-v)), où r est une valeur empirique ou une valeur réelle du rayon de la cornée, d est la distance entre le centre optique de la camera frontale (16a) et le point de réflexion dans la direction z, v est la distance entre la source de lumière (58) générant le flash lumineux et le centre optique de la caméra frontale (16a) dans la direction z et I est la distance entre la source de lumière (58) et le centre optique de la caméra frontale (16a) dans la direction y, la direction y étant orthogonale à la direction x et à la direction z et pointant vers le haut dans l'espace.

15. Logiciel comportant un code de programme pour effectuer toutes les étapes de procédé selon l'une des revendications 1 à 14, lorsque le logiciel est chargé dans un ordinateur et exécuté dans un ordinateur.

16. Procédé informatisé selon l'une des revendications 1 à 14 utilisant un dispositif (10), le dispositif (10) comportant un support de caméra (14) qui renferme partiellement un espace intérieur (22) ouvert en haut, en bas et vers l'arrière (30) et portant au moins trois caméras (16a, 16b) qui sont disposées entre deux extrémités libres (18) du support de caméra (14) et dirigées vers l'espace intérieur (22), le support de caméra (14) comportant un moyen d'éclairage (32, 34, 36) destiné à éclairer l'espace intérieur (22).

17. Procédé de centrage d'au moins un verre de lunettes dans une monture de lunettes, **caractérisé en ce que**, dans une première étape de procédé, des paramètres de centrage sont déterminés à l'aide d'un procédé selon l'une des revendications 1 à 12, et **en ce que**, dans une deuxième étape de procédé, l'au moins un verre de lunettes est centré dans la monture de lunettes avec les paramètres de centrage determines lors de la première étape de procédé.

18. Procédé d'insertion d'au moins un verre de lunettes dans une monture de lunettes, **caractérisé en ce que,** dans une première étape de procédé, des paramètres de centrage sont déterminés à l'aide d'un procédé selon l'une des revendications 1 à 14 et, dans une deuxième étape de procédé, l'au moins un verre de lunettes est inséré par meulage sur la base des paramètres de centrage déterminés lors de la première étape de procédé et destiné à un agencement dans la monture de lunettes.

19. Procédé de fabrication d'un verre de lunettes, **caractérisé par** l'étape de procédé d'insertion par meulage du verre de lunettes dans une monture de lunettes selon le procédé selon la revendication 18.

20. Procédé de fabrication d'un verre, **caractérisé par** l'utilisation d'un procédé selon l'une des revendications 17 à 19.

21. Dispositif de détermination de paramètres de centrage pour adapter des verres de lunettes à une monture de lunettes spécifiée et à la tête d'un sujet de test, le dispositif comprenant une première camera destinée à acquérir une première image depuis une première direction d'observation, au moins une deuxième caméra étalonnée par rapport à la première caméra et destinée à acquérir une deuxième image depuis une deuxième direction d'observation différente de la première direction d'observation et un ordinateur qui comprend une mémoire dans laquelle est mémorisé un logiciel qui contient un code de programme destiné à exécuter toutes les étapes de procédé selon 1'une des revendications 1 à 14, l'ordinateur comprenant un processeur destiné à exécuter le logiciel mémorisé dans la mémoire.
